(19) Europäisches Patentamt
European Patent Office
Office européen des brevets

(11) **EP 0 848 259 A1**

(12) **EUROPEAN PATENT APPLICATION**

(43) Date of publication:
**17.06.1998 Bulletin 1998/25**

(51) Int. Cl.$^6$: **G01R 31/00**, G01R 31/34

(21) Application number: **96402752.8**

(22) Date of filing: **16.12.1996**

(84) Designated Contracting States:
FR

(71) Applicant:
**MOTOROLA SEMICONDUCTEURS S.A.**
**F-31023 Toulouse Cédex (FR)**

(72) Inventor: **Ollitrault, Stephan**
**31600 Seysses (FR)**

(74) Representative:
**Joly, Jean-Jacques et al**
**Cabinet Beau de Loménie**
**158, rue de l'Université**
**75340 Paris Cédex 07 (FR)**

(54) **Stall detection circuit for a motor and method for detecting stalling of a motor**

(57)  A stall detection circuit (50) for a motor having a coil (52) through which a current signal flows comprises measuring circuitry (70) for measuring regularly a time duration (Tr) of a predetermined phase of the current signal through the coil, which is preferably a recirculation phase, comparison circuitry (72) for comparing the measured time durations, and logic circuitry (74) for providing an indication of stall when a comparison result from the comparison circuitry (72) corresponds to a predetermined pattern.

FIG.3

## Description

Field of the Invention

This invention relates to a stall detection circuit for a motor and a method for detecting stalling of a motor. Particularly, though not exclusively, the present invention relates to a stall detection circuit and a method for detecting stalling for stepper motors.

Background of the Invention

Stepper motors are widely used in applications in which accurate positioning of an output shaft is required. In some applications, the movement of the motor may be limited by hard end stops (e.g. climate control flaps in cars).

Although a blocked or stalled stepper motor may not destroy the motor itself, it is useful and, in certain applications, such as automotive applications, it is becoming increasingly a requirement, to detect when the motor is stalled.

For example, power consumption can be limited when a motor stalls, such as for example when the hard end stops are reached, by detecting stalling and by then switching off the power stages driving the motor. In addition, when absolute positions of the output shaft must be known between two hard end stops or between a default start position and a hard end stop, detecting accurately when stall occurs enables a calibration of the total number of motor steps between the two hard end stops or between the default start position and the hard end stop.

Several electrical stall detection techniques have been proposed already. For example, an out-of-step operation detection arrangement is described in European Patent Application no. EP-A-0462050. All the known techniques however monitor the current shape in the motor coils, by techniques such as sampling, differentiating, measuring the peak current, and use the observation that the current should have a stable fixed characteristic when the motor is running and another fixed characteristic when it is stalled to detect stall by detecting the differences between the current shapes.

A drawback of such techniques is that actual measurements show that the current characteristics when the motor is running or stalled are not reproducible. For example, a climate flaps control motor in a car has a gear box linked to the motor. The total play of the mechanical parts means that the output shaft of the motor is not totally blocked and moves or vibrates at each new step drive. The way the output shaft moves and the location where it has been stopped may lead to different types of behaviour in the currents through the motor coils. It is therefore difficult to rely on a specific current shape in order to detect stall. Such a technique only works properly if the application parameters, such as mechanical parts, power supply, motor characteristics, etc., are very stable and there is no mechanical play.

Another drawback of the known techniques arises due to the fact that all these techniques require current or voltage values to be stored at given times so that they can then be compared to reference values. The values are stored in analog memories, such as capacitors, or digital memories which requires the use of expensive analog-to-digital converters. Both analog and digital solutions require complex and expensive analog/digital circuitry in order to provide sufficient accuracy. A further disadvantage with using an analog solution is that it has limited flexibility. It is significantly harder to modify analog references and information than digital references and information.

There is therefore a need for an improved stall detection circuit for a motor, and an improved method for detecting stalling of a motor, which address the above drawbacks.

Summary of the Invention

In accordance with the present invention there is provided a stall detection circuit for a motor as recited in claim 1 of the accompanying claims.

In accordance with the present invention there is provided a method for detecting stalling of a motor as recited in claim 9 of the accompanying claims.

Brief Description of the Drawings

A preferred embodiment of stall detection circuit for a motor in accordance with the present invention and a preferred embodiment of a method for detecting stalling of a motor in accordance with the present invention will now be described, by way of example only, with reference to the accompanying drawings, in which :

FIG. 1 is a schematic diagram of a typical stepper motor arrangement ;
FIG. 2 is a graphical representation of current signals in a coil of a stalled motor and a running motor;
FIG. 3 is a schematic diagram of an embodiment of stall detection circuit in accordance with the present invention for a stepper motor ;
FIG 4 is a schematic circuit diagram of a part of a stepper motor showing its operation during a step;
FIG. 5 is a schematic circuit diagram of the same part of the stepper motor as in FIG. 4, showing its operation during a different step;
FIG. 6 is a graphical representation of a current signal in one coil of a stepper motor as a function of time;
FIG. 7 is a graphical representation of a voltage signal at an end of said one coil as a function of time;
FIG. 8 is a graphical representation of a voltage signal at another end of said one coil as a function of time; and

FIG. 9 is a graphical representation of a step control signal for said one coil.

## Detailed Description of the Drawings

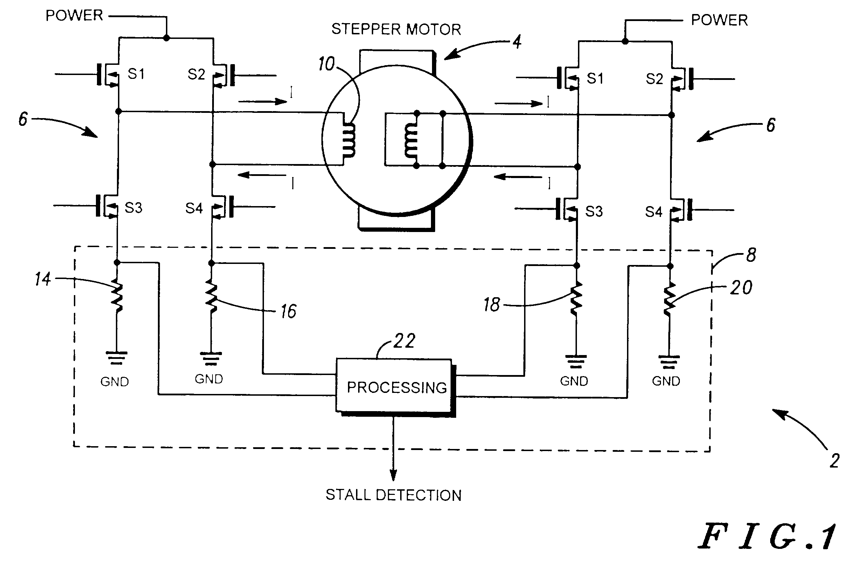

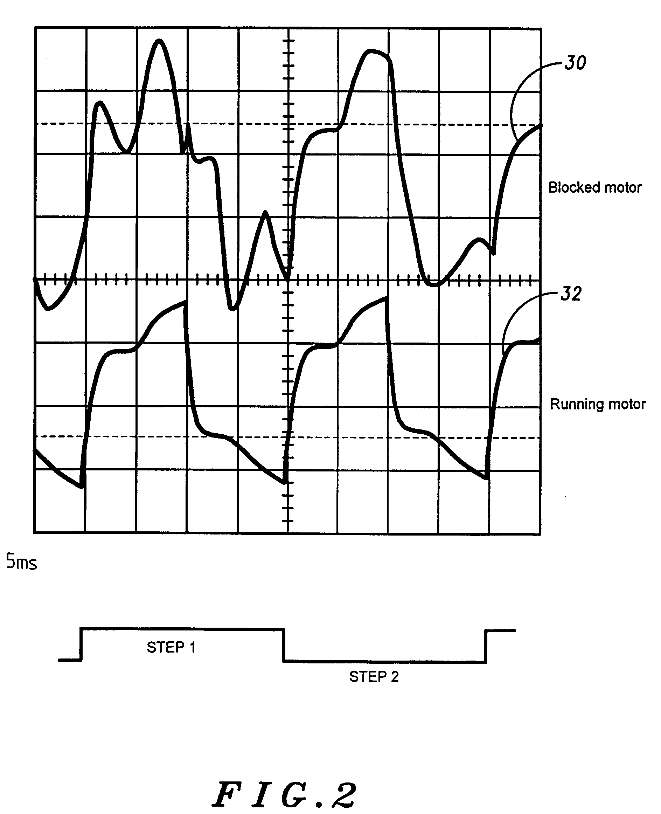

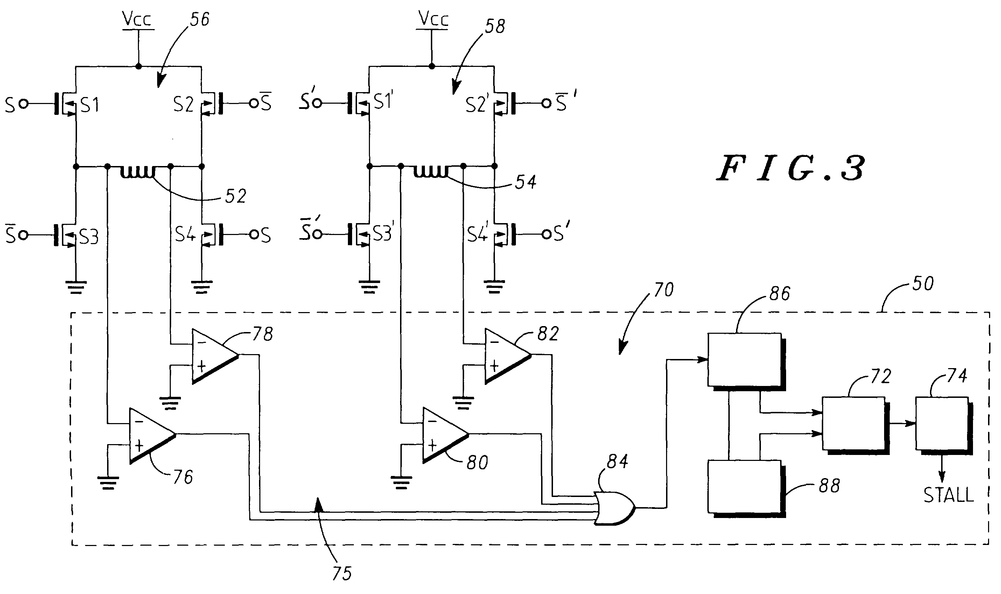

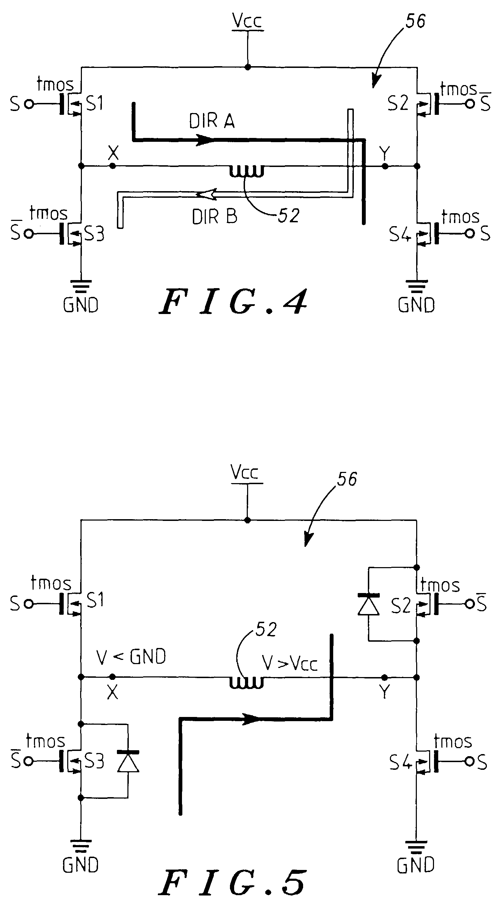

FIG. 1 shows a typical stepper motor arrangement 2 comprising a stepper motor 4 driven by two H-bridge drivers 6 and stall detection circuitry 8. The stepper motor 4 comprises two coils 10, 12 and is often linked to a gear box (not shown) which drives an output actuator such as a flap, belt, mechanical head, etc. A simple representation of the equivalent circuit for such a motor is given by an inductance in series with a resistor.

As is well known in the art, the two H-bridge drivers 6 deliver current in both directions to the two coils 10, 12, the direction being determined by which MOS switches of the drivers 6 are closed. FIG. 1 shows the current direction in both coils 10, 12 when switches S1 and S4 are closed and switches S2 and S3 are open of the respective drivers 6.

In a two-phase-on-drive technique, both coils 10, 12 are always energised. Since there are two current directions per coil, there are four possible states. By properly alternating the four states, the motor 4 can run in both directions. Pulsed control signals control the opening and closing of the switches S1-S4 and, thus, control the direction of the current flow through the coils 10, 12. Each control signal pulse thus corresponds to a current inversion in one of the coils which leads to a mechanical step. The number of steps per revolution depends on the rotor pole number of the motor 4 and the number of stator coils.

With switches S1 and S4 closed, the current through coil 10 is sensed by sense resistor 16 (which is one of four sense resistors 14, 16, 18, 20). The sensed signal is processed by processing circuitry 22. As mentioned in the introduction, there are various processing techniques that have been used such as sampling, differentiation, amplification, comparison. Whatever the processing technique, the result is stored and compared to some reference and stall detection is indicated when the stored result differs from the expected result.

However, as stated in the introduction and as can be seen from FIG. 2 which shows graphical representations obtained by experiment of the current signals 30 and 32 as a function of time (two steps) for a stalled or blocked stepper motor and for a running stepper motor respectively, the shape of the current signal 30 can vary significantly even in consecutive steps. Since the current signal shape is generally not reproducible, the arrangement of FIG. 1 can produce errors in stall detection.

Also as mentioned in the introduction, the arrangement 2 has additional drawbacks due to the fact that the processing circuitry 22 processes analog signals sensed across the sense resistors 14, 16, 18, 20.

Referring now to FIG. 3, a stall detection circuit 50 in accordance with a preferred embodiment of the present invention, for detecting a stall in a motor comprising at least one coil, is shown. In the embodiment shown in FIG. 3, the motor comprises a bipolar stepper motor comprising two coils 52, 54 driven by two H-bridge drivers 56, 58 respectively and operating with a two-phase-on-drive technique. It is, however, not intended to limit the invention to the specific arrangement shown in FIG. 3.

The stall detection circuit 50 of the present invention comprises measuring circuitry 70 for measuring regularly a time duration of a predetermined phase of the current signal through the coil. The predetermined phase of the current signal can be any repeated phase of the current signal which has substantially a constant time duration whilst the motor is running correctly and a variable time duration whilst the motor is stalled or blocked. Preferably, the predetermined phase is a recirculation phase which is substantially constant for each measurement whilst the motor is running. More details of the recirculation phase are given below. The stall detection circuit 50 further comprises comparison means 72 for comparing the measured time durations between each consecutive measurement and logic means 74 for providing an indication of stall when a comparison result from the comparison means 72 corresponds to a predetermined pattern.

Each of the H-bridge drivers 56, 58 comprises switches S1 (S1') and S3 (S3') and switches S2 (S2') and S4 (S4') coupled in series between a first reference voltage, preferably ground, and a second reference voltage or power supply, Vcc. Step control signals S, S' and their inverses are applied to the control electrodes of switches S1-S4 and S1'-S4' to control the opening and closing of the switches and hence the direction of the current signals flowing through the coils 52 and 54. Each new mechanical step is accomplished due to an inversion of the current signal in one of the two coils 52, 54 in response to the step control signals S, S'.

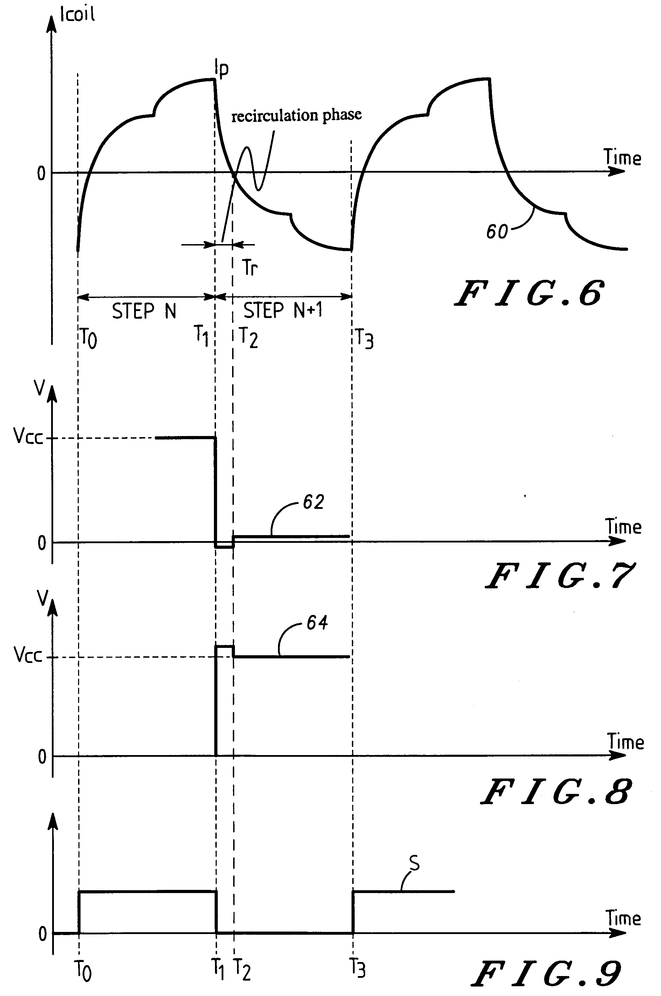

The mechanism involved when the current signal is inverted in a coil will now be described with reference also to FIGs. 4-9. FIGs. 4 and 5 show one of the coils 52 and its associated H-bridge driver 56 and the direction of the current signal through the coil 52 at different times, FIG. 6 shows the current signal 60 flowing through the coil 52 for two steps N, N+1, FIG. 7 shows the voltage signal 62 at an end X of coil 52 for the two steps N, N+1, FIG. 8 shows the voltage signal 64 at an end Y of coil 52 for the two steps N, N+1 and FIG. 9 shows the step control signal S for the coil 52 for two steps N, N+1.

For step N, the step control signal S and its inverse closes switches S1 and S4 and opens switches S3 and S2 so that between time T0 to T1, the current signal flows in direction A through the coil 52 (FIG. 4). During time T0 to T1, the coil's behaviour is mainly inductive such that current flows in direction A and increases with time until the end of the step when it reaches a peak current Ip.

For a new step, N+1, the step control signal S and its inverse opens switches S1 and S4 and closes switches S3 and S2 but before the current signal is inverted to flow in direction B, the current signal Ip at T1 must first collapse to zero. In other words, the energy stored in the coil 52 takes time T2-T1 to collapse to zero before the current signal flows in direction B. This collapse occurs by a voltage inversion across the coil wherein the current path is as shown in FIG. 5: the current flows from ground through the coil 52 to the power supply Vcc. The voltage signal 62 at end X of coil 52 is therefore less than ground during time T1-T2 and the voltage signal 64 at end Y of coil 52 must therefore be greater than the power supply Vcc during time T1-T2. At time T2, the current signal has dropped to zero and the current signal then flows in direction B. The cycle then repeats in the coil 52.

The phase of the current signal 60 between T1 and T2 is known as the recirculation phase and has a time duration Tr, where $Tr = T2 - T1$ . During this recirculation phase of the current signal, the voltage signals at the coil's ends are above the power supply Vcc on one side and below ground on the other side.

If the motor were a pure constant inductance, the voltage signal V across the coil 52 during the recirculation phase would be given by the following equation:

$$V = L * dI/dt \qquad (1)$$

This gives

$$\Delta t = L * Ip/V \qquad (2)$$

where

L is the coil inductance
Ip the peak coil current
$\Delta t$ is the time duration Tr of the recirculation phase

Actually the motor is not a constant inductance but assuming its impedance is mostly inductive, equation (2) can be re-written to give:-

$$\Delta t = L(t) * di/V \qquad (3)$$

for i decreasing from Ip to zero, where L(t) is the equivalent impedance of the coil.

Equation 3 shows that the time duration of the recirculation phase depends on the voltage across the coil which is substantially the power supply Vcc, the peak coil current Ip, and the inductance of the coil L(t). The peak current Ip and the coil inductance L(t) are stable from step to step when the motor is running. Thus, the time duration of the recirculation phase is substantially constant between steps. When the motor is stalled, the total mechanical play of the motor (including the hard end stop), the position of the rotor, induce erratic rotor movement at each step. This produces an unstable equivalent impedance L(t) at the motor coil (stator) and hence a variation in the time duration of the recirculation phase. In fact both the parameters Ip and L(t) of equation 3 are strongly dependent on the behaviour of the motor.

The recirculation phase exists when a current signal is reversed through a coil. FIG. 6 shows the current signal through one coil 52. The recirculation phase occurs with the coil(s) in which current is being inverted. As an example, for a two-coil motor arrangement wherein both coils are energised at the same time, a recirculation phase will occur every step (alternating between the two coils). Since the two coils are generally substantially the same, the time durations of the recirculation phase in each coil will be substantially the same.

Thus, the stall detection circuit 50 in accordance with the preferred embodiment is arranged to measure the time duration of the recirculation phases of a current signal flowing through a coil. Since, from the above, the time duration of the recirculation phase is substantially constant when the motor is running but not when the motor is blocked, by comparing the consecutive measured time durations (either every step or ever other step depending on the number of coils), the stall detection circuit 50 can determine when a stall has occurred.

The measuring circuitry 70 in accordance with the preferred embodiment comprises first comparison circuitry 75 having first 76, second 78, third 80 and fourth 82 comparators, each comparator for comparing a voltage signal at a respective end of a respective one of the coils 52, 54 with a reference voltage, which in the preferred embodiment is ground but it could alternatively be Vcc. Timing circuitry comprising a wired OR logic gate 84 having inputs coupled to the outputs of the first 76, second 78, third 80 and fourth 82 comparators and a digital counter 86 coupled to the output of the wired OR logic gate 84, measures the time duration for which a voltage signal at an end (X, Y, X', Y') of a coil differs from the reference voltage in a predetermined way. When the reference voltage is ground, the timing circuitry measures the time duration of when the voltage signal at an end (X, Y, X', Y') is less than ground and when the reference voltage is the power supply Vcc, the timing circuitry measures the time duration of when the voltage signal at an end (X, Y, X', Y') is greater than Vcc.

An output of the counter 86 is coupled to storage means or register 88 and to the comparison means 72. Register 88 holds the value of a preceding measured time duration of the recirculation phase.

The timing circuitry of the preferred embodiment operates as follows.

Although the stepper motor of FIG. 3 operates with a two-phase-on drive technique, for each step the current signal is reversed through only one of the coils. For the following explanation, it will be assumed that the current signal is reversed in coil 54.

At the beginning of the step N, the voltage signals at ends X, Y of coil 52 are greater than ground so that the outputs of the first 76 and second 78 comparators have a second state, logic '0'. However, when the current signal is inverted in coil 54, the voltage signal at end X' of coil 54 is less than ground and the voltage signal at end Y' of coil 54 is greater than Vcc. The output of the third comparator 80 has therefore a first state, logic '1', and the output of the fourth comparator 82 is logic '0'. When the output of the third comparator 80 switches to logic '1', the output of the logic gate 84 switches to logic '1' and remains in this state until the recirculation phase in coil 54 is completed. The counter 86 counts the time for which the output of the logic gate 84 is a logic '1' and transfers the count value to register 88 to store as the measured time duration of the recirculation phase.

The comparison means 72 compares each measured time duration with the preceding measured time duration which is stored in the register 88 and provides an output signal having a first state, logic '1', when the difference between the measured time duration and preceding time duration is greater than a first value and a second state, logic '0', when the difference between the measured time duration and preceding time duration is less than the first value (or equal). Thus, referring to the description of the operation of the timing circuitry given above, the comparison means 72 compares the time duration measured during step N+1 with the time duration measured and stored during step N and generates an output signal having a logic '1' or logic '0' depending on the comparison. The measured time duration of step N+1 is then stored in the register 88 and once the time duration for step N+2 has been measured, this measured time duration (N+2) is compared with the preceding one (N+1) stored in register 88.

The first value is picked according to the application, motor type. For one experiment with a climate control stepper motor, 25% was used as the first value.

The output signal of the comparison means 72 is coupled to the logic means 74. The logic means 74 determines whether a result from the comparison means corresponds to a predetermined pattern and, if it does, the logic means generates a stall signal, STALL.

The torque of a running motor may vary with time which can affect the time duration of the recirculation phases. In the preferred embodiment, the logic means 74 is arranged to act as a filter so that the stall detection circuit is not too sensitive and does not generate a stall indication in error due, for example, to variations in torque of a running motor. The logic means 74 is therefore arranged to look at M consecutive output signals from the comparison means and if there are N output signals out of the M output signals having the first state, then the logic means 74 generates the stall signal STALL. N and M are both positive integers and M is greater than or equal to N.

The logic means 74 comprises a flag generator which generates a flag signal when an output signal generated by the comparison means 72 has the first state and a no-flag signal when an output signal generated by the comparison means 72 has the second state. A stall signal generator generates the stall signal STALL when there are N flag signals generated for M consecutive output signals.

For the experiment mentioned above with the climate control stepper motor, the values of M and N were chosen such that M=6, and N=4.

If the first value was chosen to be for example 90%, the predetermined pattern may be for example one output signal having the first state. This will mean that stall can be detected more quickly than if the pattern comprised N output signals having the first state out of M output signals. However, having fewer output signals to look at means that the system is more sensitive and may generate the stall signal in error.

The comparison means 72 and the logic means 74 may be implemented in hardware or software. Implementing these features in software has an advantage in that it makes the arrangement more flexible: the values of M, N, the first value can be changed very simply. This provides significant advantages when it is desired to provide one stall detection circuit for different types of motors.

In summary, by regularly measuring the time duration of a predetermined phase of the current signal through the coil, the present invention does not monitor the fixed characteristics, such as coil current, which can vary considerably from step to step, nor does it process analog information as in the known arrangements described above. By monitoring the time duration, the present invention allows digital information on the behaviour of the motor to be obtained and so the need for complex analog and digital circuitry can be avoided.

The present invention provides a simple, flexible solution for detecting stalling of a motor.

Although the present invention has been described with specific reference to a bipolar (two H-bridge driver) stepper motor operating with two-phase-on-drive technique, the principle of the present invention can apply equally to a unipolar (four low-side drivers) stepper motor or a unipolar or a bipolar stepper motor operating with one-phase-on-drive where only one coil is energised at a given time or any other type of stepper motor (e.g. a stepper motor with more than four coils). The present invention may also be applied to motors in general whose coil current has a repeating predetermined phase whose duration can be regularly measured and compared.

**Claims**

1. A stall detection circuit (50) for a motor comprising a coil (52) through which a current signal flows, the stall detection circuit comprising:

    measuring circuitry (70) for measuring regularly a time duration of a predetermined phase of the current signal through the coil;

comparison means (72) for comparing the measured time durations; and

logic means (74) for providing an indication of stall when a comparison result from the comparison means corresponds to a predetermined pattern.

2. A stall detection circuit according to claim 1, wherein the direction of flow of the current signal in the coil (52) is arranged to be reversed after a change in state of a control signal and wherein the predetermined phase of the current signal is a recirculation phase which occurs regularly after the change in state of the control signal.

3. A stall detection circuit according to claim 1 or 2, wherein the measuring circuitry (70) comprises:

first comparison circuitry (76, 78) for comparing voltage signals at ends of the coil with a reference voltage;

timing circuitry (86) for measuring the time duration of when one of the voltage signals differs from the reference voltage in a predetermined way; and

storage means (88) for storing the measured time duration after a measurement, wherein the comparison means (72) is arranged so that, in use, it compares each measured time duration with its preceding measured time duration stored in the storage means (88) and provides as the comparison result at least one output signal, each of the output signals having a first state when a difference between the measured time duration and the preceding measured time duration is greater than a first value and a second state when the difference is equal to or less than the first value.

4. A stall detection circuit according to claim 3, wherein the first comparison circuitry comprises:

a first comparator (76) for coupling to an end of the coil (52) for comparing the voltage signal at the end of the coil to the reference voltage and for providing an output signal in response thereto, the output signal having a first logic state when the voltage signal differs from the reference voltage in the predetermined way and having a second logic state otherwise; and
a second comparator (78) for coupling to another end of the coil for comparing the voltage signal at said another end of the coil to the reference voltage and for providing an output signal in response thereto, the output signal having a first logic state when the voltage signal differs from the reference voltage in the predetermined way and having a second logic state otherwise,

and wherein the timing circuitry comprises:

a logic gate (84) having inputs for receiving the output signals from the first and second comparators (76, 78) and an output for providing a logic output signal having the first state when one of the output signals from the first and second comparators has the first logic state and having the second logic state otherwise; and
a counter (86) coupled to the output of the logic gate (84) for counting the time the logic output signal has the first logic state so as to provide a count value at an output, the count value representing the time duration of one predetermined phase.

5. A stall detection circuit according to claim 3 or 4, wherein the predetermined pattern comprises one output signal having the first state.

6. A stall detection circuit according to claim 3 or 4, wherein the predetermined pattern comprises N output signals having the first state out of M consecutive output signals, where N and M are positive integers and M is greater than or equal to N.

7. A stall detection circuit according to claim 6, wherein the logic means (74) comprises a flag generator for generating a flag signal when an output signal generated by the comparison means (72) has the first state and a no-flag signal when an output signal generated by the comparison means has the second state and a stall generator for generating a stall signal when there are N flag signals generated for M consecutive output signals.

8. A stepper motor arrangement comprising:

a stepper motor having two coils (52, 54) through which current signals flow; and
a stall detection circuit (50) according to any preceding claim, the measuring circuitry being adapted for measuring regularly a time duration of a predetermined phase of each of the current signals through the coils (52, 54) and the comparison means for comparing the measured time durations between consecutive measurements.

9. A method for detecting stalling of a motor comprising a coil (52) through which a current signal flows, the method comprising the steps of:

measuring regularly a time duration of a predetermined phase of the current signal through the coil;

comparing the measured time durations; and providing an indication of stall when a comparison result of the comparing step corresponds to a predetermined pattern.

10. A method for detecting stalling of a motor according to claim 9, wherein the direction of flow of the current signal in the coil (52) is arranged to be reversed after a change in state of a control signal and wherein the predetermined phase of the current signal is a recirculation phase which occurs regularly after the change in state of the control signal.

11. A method for detecting stalling of a motor according to claim 9 or 10, wherein the measuring step comprises the steps of:

comparing voltage signals at ends of the coil with a reference voltage;
measuring the time duration of when one of the voltage signals differs from the reference voltage in a predetermined way; and
storing the measured time duration after a measurement.

12. A method for detecting stalling of a motor according to claim 11, wherein the step of comparing the measured time duration comprises:

comparing each measured time duration with its preceding measured time duration stored in a storage means (88); and
providing as the comparison result at least one output signal, each of the output signals having a first state when a difference between the measured time duration and the preceding measured time duration is greater than a first value and a second state when the difference is equal to or less than the first value.

13. A method for detecting stalling of a motor according to claim 12, wherein the predetermined pattern comprises one output signal having the first state.

14. A method for detecting stalling of a motor according to claim 12, wherein the predetermined pattern comprises N output signals having the first state out of M consecutive output signals, where N and M are positive integers and M is greater than or equal to N.

15. A method for detecting stalling of a motor according to claim 14, wherein the step of providing an indication comprises the steps of:

generating a flag signal when an output signal generated by the comparison means has the first state and a no-flag signal when an output signal generated by the comparison means has the second state; and

generating a stall signal when there are N flag signals generated for M consecutive output signals.

FIG.1

EP 0 848 259 A1

5ms

*FIG.2*

FIG.3

EP 0 848 259 A1

*FIG.4*

*FIG.5*

Icoil

Ip

recirculation phase

Time

0

Tr

60

STEP N

STEP N+1

T₀

T₁ | T₂

T₃

*FIG.6*

V

Vcc

62

Time

0

*FIG.7*

V

Vcc

64

Time

0

*FIG.8*

S

0

T₀

T₁ T₂

T₃

*FIG.9*

European Patent
Office

**EUROPEAN SEARCH REPORT**

Application Number

EP 96 40 2752

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE 296 09 570 U (SAIA AG)<br>* claim 4 *<br>--- | 1,3,8,9 | G01R31/00<br>G01R31/34 |
| A,D | EP 0 462 050 A (SAIA AG)<br>* claim 1; figure 1 *<br>----- | 1 | |
| | | | TECHNICAL FIELDS<br>SEARCHED      (Int.Cl.6) |
| | | | G01R |

The present search report has been drawn up for all claims

| Place of search | Date of completion of the search | Examiner |
|---|---|---|
| THE HAGUE | 16 May 1997 | Hoornaert, W |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.....................................................................................................................
& : member of the same patent family, corresponding
document

EPO FORM 1503 03.82 (P04C01)